(19) Europäisches Patentamt
European Patent Office
Office européen des brevets

(11) **EP 0 613 717 B1**

(12) ## EUROPEAN PATENT SPECIFICATION

(45) Date of publication and mention
of the grant of the patent:
**04.06.1997 Bulletin 1997/23**

(51) Int. Cl.$^6$: **B01F 7/20**

(21) Application number: **94102035.6**

(22) Date of filing: **10.02.1994**

(54) **Rotating stirring device**

Rotierende Rührvorrichtung

Dispositif agitateur à rotation

(84) Designated Contracting States:
**AT BE CH DE DK ES FR GB GR IE IT LI LU NL PT SE**

(30) Priority: **17.02.1993 IT MI930289**

(43) Date of publication of application:
**07.09.1994 Bulletin 1994/36**

(73) Proprietor: **AUSIMONT S.p.A.**
**I-20121 Milano (IT)**

(72) Inventors:
• **Wu, Hua**
**Bollate, Milan (IT)**
• **Arcella, Vincenzo**
**Novara (IT)**

(74) Representative: **Sama, Daniele, Dr. et al**
**Sama Patents**
**Via Morgagni, 2**
**20129 Milano (IT)**

(56) References cited:
**FR-A- 1 247 722**     **US-A- 3 342 460**

• **PATENT ABSTRACTS OF JAPAN vol. 13, no. 84 (C-572) (3432) 27 February 1989 & JP-A-63 270 532 (NIPPON KAYAKU)**
• **ADVANCES IN CHEMICAL ENGINEERING, vol.17, 1992, BOSTON, US (ET AL.) pages 4 - 8 Y.T.SHAH 'design parameters for mechanically agitated reactors'**

## Description

The present invention relates to a cylinder-shaped reactor comprising a rotating stirring apparatus, particularly for mixing heterogeneous systems.

Various kinds of mechanical stirred reactors are known in the art, generally of cylindric shape, in which processes are carried out where a continuous and uniform mixing of various components and an efficient mass exchange between different phases (for instance, gas-liquid, gas-liquid-solid, liquid-solid, liquid-liquid, etc.) are required. The mechanical stirring is commonly carried out through a stirrer put inside the reactor in axial position. The particular stirrer shape (turbine, blade, propeller, etc.) is mainly chosen according to the viscosity of the mass to be put under stirring (to this purpose see "Advances in Chemical Engineering", vol. 17, pag. 5-8, Academic Press, 1992).

A common limit to all the stirring devices of the art is represented, in the case of gas-liquid systems, by a generally not high mass transfer coefficient between the phases and which considerably decreases when an increase with time of the volume of the mass put under stirring occurs. This is the case, for instance, of polymerization reactions in emulsion or in suspension in which at least one of the monomers is present in the gas phase: during the polymerization a gradual increase of the volume and of the solid content of the liquid phase occurs. A lowering of the mass transfer between the gas phase and liquid phase and consequently a reduction of the process yield derives therefrom.

The difficulty to obtain satisfactory mass exchanges between the various phases imposes moreover some limits in the reactor shape. In particular, with the traditional stirring systems the use of reactors with a high height/diameter ratio, which would assure a more efficient thermal exchange, is in fact impossible.

In the gas-liquid systems, in order to improve the mass exchange between the phases, the use of devices distributing the gas inside the liquid phase (spargers) is known. They are in practice toroidal shaped devices, endowed with holes, through which the gas is bubbled. Such devices require however a very frequent maintenance, as they tend to be easily clogged, especially in the case in which in the liquid phase a solid phase is present or is formed during the reaction (it is the case, for instance, of the polymerization reactions).

The Applicant has now found a new type of rotating stirring device as described hereinunder, particularly suited for mixing heterogeneous systems, which permits to obtain a very efficient mass exchange between different phases and which remains substantially constant when the volume of the mass under stirring increases. Moreover a high mixing homogeneity, with particularly low shear stress values, is achieved.

According to the present invention there is provided a cylinder-shaped reactor comprising a stirring apparatus as defined in claim 1. The invention furthermore provides a (co)polymerization process as defined in claim 7.

The characteristics of the invention will be now better illustrated by the following description and by the enclosed drawings relating to a non-limitative embodiment, in which the figures show:

Fig. 1, a longitudinal section of the stirring device of the invention along the plan X-X' of Fig. 2;
Fig. 2, a top view of the stirring device according to the invention;
Fig. 3, a section of the stirring device according to the invention;
Fig. 4, a section of a stirring device according to the prior art:
Fig. 5, a graph showing the mass transfer coefficient as a function of the ratio between liquid height (H) and reactor diameter (T) for a reactor + stirring device system according to the invention and for two reactor + stirring device systems of the prior art.

The stirring device (1) shown in the above figures comprises three stirring elements (2), which, according to a preferred embodiment of the present invention, are concave blade-shaped with the concavity towards the rotation direction of the device itself. The stirring elements (2) are symmetrically arranged with respect to the rotation axis, each forming with respect to the other an angle (A) of 120°.

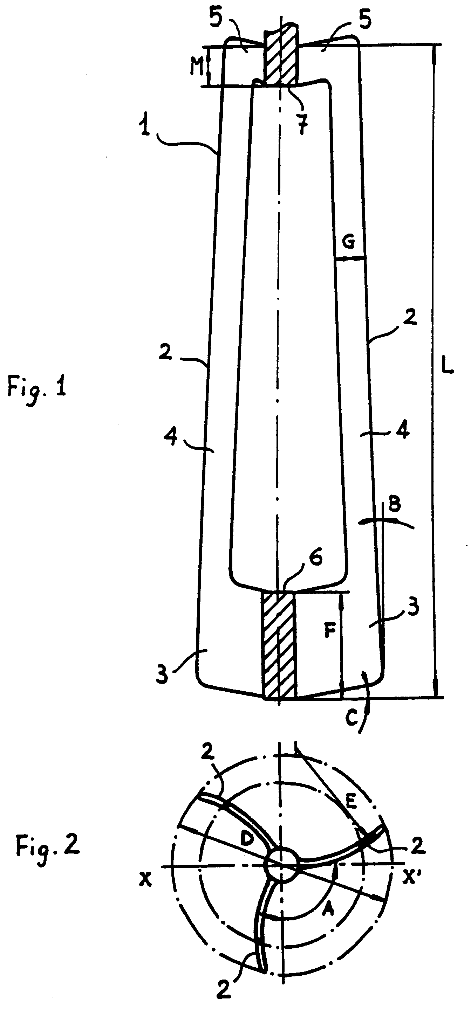

Each stirring element (2) consists of a lower end part (3), a vertical part (4) and an upper end part (5). As shown in Fig. 1, the stirring device (1) preferably shows a tapering towards the upper part, in which the lower end part (3) is wider than the upper end part (5), so that the vertical part (4) defines with the rotation axis an angle (B) comprised between 0° to 10°. Such tapering has the function of obtaining a more homogeneous distribution of the axial displacement inside the reactor.

The three stirring elements (2) are joined to each other through the lower (6) and upper (7) connection elements, on which the lower end (3) and upper end (5) parts are connected respectively. The upper connection element (7) is solidly joined to a drive axis, fit to give the rotation to the stirring device (1).

The lower edge of the lower end part (3) forms with the horizontal plane an angle (C) comprised between 0° and 45°, according to the particular shape of the reactor bottom, which is usually concave.

As to the size characteristics of the stirring device of the present invention, these ones essentially depend from the reactor sizes in which the device has to be employed.

Considering a substantially cylinder-shaped reactor having a diameter (T) and a height (V), the sizes of the stirring device of the present invention are preferably the following:

- base diameter (D) of the stirring device (1): from 1/3 to 2/3 of the diameter (T);
- bending radius (E) of the stirring elements (2):

higher than or equal to 1/3 of the diameter (T);
- height (F) of the lower end part (3): higher than or equal to 1/5 of the diameter (D);
- Width (G) of the vertical part (4): from 1/20 to 1/4 of the diameter (T);
- height (L) of the stirring elements (2): from 3/2 of the diameter (D) to a value about equal to the height (V):

Of course the maximum value of the height (L) depends from the particular shape of the reactor and it must however be such as to allow the free rotation of the device inside the reactor.

As regards the height (M) of the upper end part (5), this generally has no influence on the stirring effectiveness, as it remains, under usual conditions, outside the mass put under stirring. However, the height (M) is generally at least equal to 1/20 of the diameter (T).

Thanks to the high mass exchange between the different phases and to the low shear stress, the present invention is particularly advantageous for reactors to be used in:

- (co)polymerization reactions in emulsion, in particular of fluorinated olefinic monomers, for the production of (co) polymers, such as, for example: homopolymers of tetrafluoroethylene and its elastomeric or plastomeric copolymers with hexafluoropropene, fluorovinylethers, such as perfluoropropylvinylether or perfluoromethylvinylether; homopolymers of vinylidene fluoride and its elastomeric or plastomeric copolymers with hexafluoropropene, tetrafluoroethylene, fluorovinylethers, fully hydrogenated olefins, brominated and/or iodinated vinyl comonomers, etc.;
- (co)polymerization reactions in suspension, in particular of fluorinated olefinic monomers, for the production of (co)polymers such as, for instance, ethylene/tetrafluoroethylene (ETFE) or ethylene/chlorotrifluoroethylene (CTFE) copolymers;
- fermentation reactions for the production of active principles for pharmaceutical use, in particular those reactions in which shear stress sensitive microorganisms and/or products are present;
- processes for slurry preparation, in particular those processes in which shear stress sensitive products are employed (for instance preparation of zeolites dispersions).

As previously already pointed out, the stirring device of the present invention assures a reaction rate quite constant in time, with homogeneous mixing and low shear stress. In particular, in the case of polymerization reactions in emulsion, a low shear stress is extremely advantageous, as it allows to obtain stable polymerization latexes and it avoids the undesired formation of polymer coagula. Such coagula, as well known, besides fouling the reactor with subsequent maintenance problems, cause various inconveniences, such as reduction of the thermal exchange coefficient, contamination of the polymer, lowering of the reaction rate, etc.

In case of polymerizations in suspension, the stirring device of the present invention permits moreover to obtain an homogeneous mixing also for contents of suspended solid higher than 50% by weight.

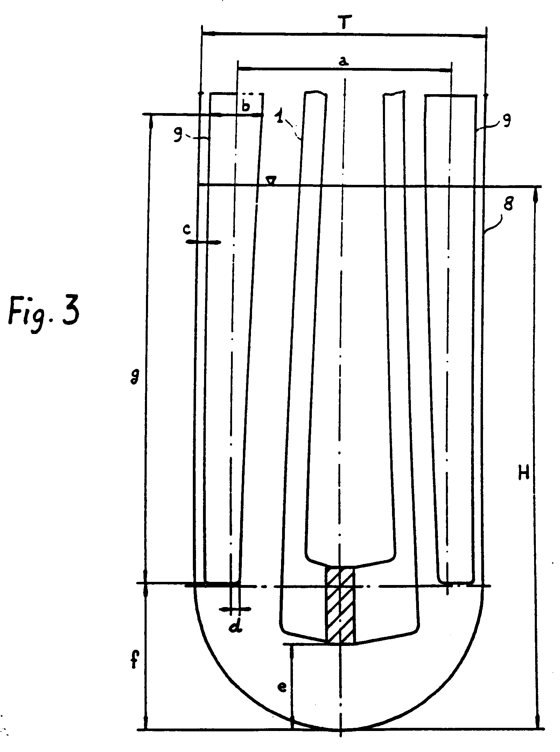

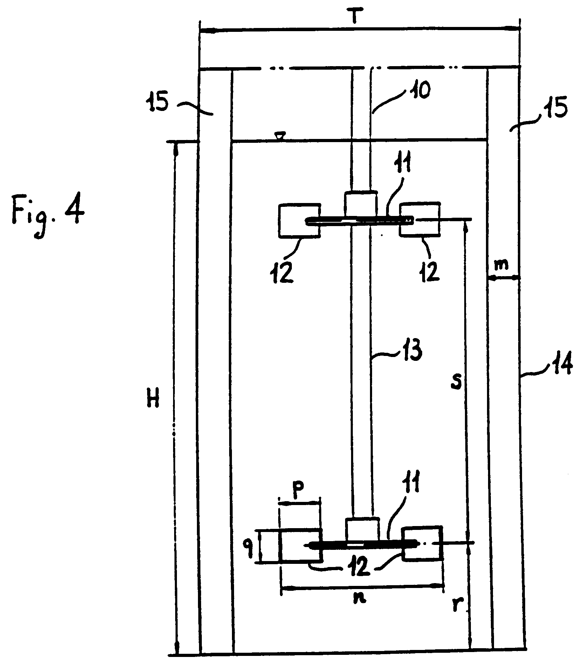

The particular effectiveness of the present invention in the mixing of heterogeneous systems is evident from the data reported hereinbelow, which compare the stirring device of the present invention (Fig. 3) with a device of the prior art (Fig. 4), in which the stirring is obtained through two Rushton turbines placed on the same rotation axis.

Fig. 3 shows a section of the stirring device of the present invention placed into a reactor (8) provided with a baffles couple (9) symmetrically placed inside the reactor (8). The level of the liquid put under stirring is indicated by H. The real sizes of the various elements of the system reactor + stirrer employed in the measurements are the following:

Reactor (notation of Fig. 3):
T = 202 mm; a = 150 mm; b = 36 mm; c = 7 mm; d = 6 mm; e = 60 mm; f = 110 mm; g = 324 mm;
Stirrer (notation of Figs. 1 and 2):
A = 120°; B = 2.42°; C = 10°; D = 112 mm; E = 60 mm; F = 54 mm; G = 14 mm; L = 420 mm; M = 20 mm.

Fig. 4 shows a section of the device of the prior art (10), consisting of a couple of six blades (12) Rushton turbines (11), being said turbines (11) set on a rotation shaft (13), placed into a reactor (14) provided with four baffles (15) symmetrically placed inside the reactor (14). The level of the liquid put under stirring is indicated by H. The real sizes of the various elements of the system reactor + stirrer employed in the measurements are the following:

T = 202 mm; m = 20.2 mm; n = 100 mm; p = 25 mm;

q = 20 mm; r = 67.3 mm; s = 200 mm.

For each system stirrer + reactor the mass transfer coefficient $(k_1)$ of the oxygen between the liquid phase (water) and gas phase (air) has been measured, according to the method described by Y. Imai, H. Takei and M. Matsumura in "Biotechnology and Bioengineering", Vol. XXIX, p. 982-993 (1987). The measurements have been carried out at different filling levels of the reactor.

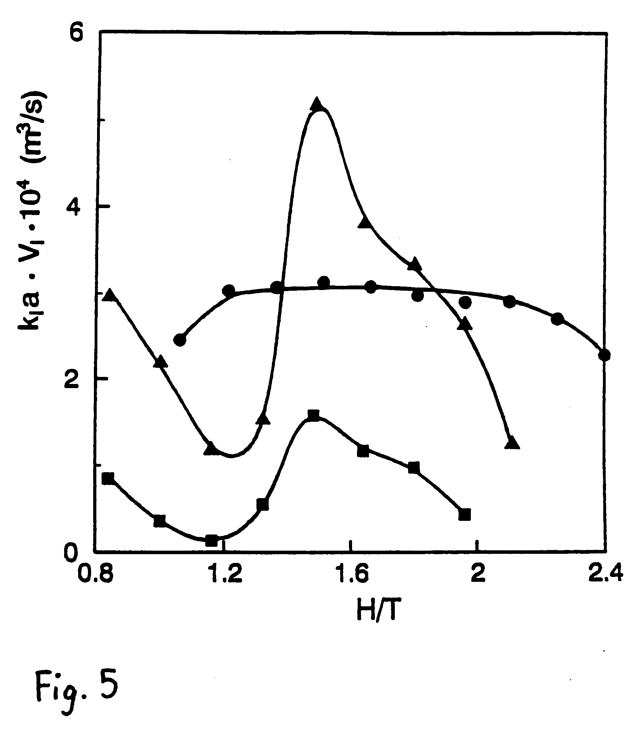

The results are reported in Fig. 5. In abscissa the ratio H/T is reported, that is, the ratio between liquid height (H) and reactor diameter (T), in ordinates the product $k_1 a \cdot V_1 \cdot 10^1$, where $k_1$ is the mass transfer coefficient (expressed in m/s), a is the gas-liquid interface specific area (expressed in $m^{-1}$) and $V_1$ is the liquid volume in the reactor (expressed in $m^3$).

The three curves reported in Fig. 5 refer to:

- system reactor + stirring device of the present invention (Fig. 3), with rotation rate N = 5.8 s$^{-1}$ and specific power W = 2.0 - 2.6 Kw/m$^3$ (symbol ●);
- system reactor + stirring device of the prior art (Fig. 4), with rotation rate N = 10 s$^{-1}$ and specific power W = 6.5 - 10 Kw/m$^3$ (symbol ▲);
- system reactor + stirring device of the prior art (Fig. 4), with a rotation rate N = 6.5 s$^{-1}$ and specific power W = 1.8 - 2.8 Kw/m$^3$ (symbol ■).

The specific power, which is a quantity correlated to the shear stress, varies upon varying the filling level of the reactor.

From the comparison of the graphs reported in Fig. 5, it is clear that with the stirring device of the present invention it is possible to obtain a substantially constant mass exchange between gas phase and liquid phase when the reactor filling level varies, while with the device of the prior art very large fluctuations are observed. It is also important to note how, the specific power being equal, the device object of the present invention assures a much higher mass exchange between the phases.

**Claims**

1. Cylinder-shaped reactor comprising a stirring apparatus, particularly suitable for mixing heterogeneous systems, said stirring apparatus comprising a rotating stirring device (1) and a drive shaft coaxial with respect to the rotation axis of the stirring device (1), said rotating stirring device being connected to the drive shaft and comprising a plurality of stirring elements (2) which are C-shaped in the horizontal plane and symmetrically arranged about the rotation axis, characterized in that each stirring element (2) comprises a lower end part (3), a vertical intermediate part (4) and an upper end part (5), the stirring elements (2) are attached together at the upper (7) and lower (6) end parts, and said stirring device (1) has a base diameter (D) in the range of 1/3 to 2/3 of the diameter (T) of the reactor, the lower end part (3) has a height (F) at least 1/5 of the base diameter (D) of the stirring device, the vertical part (4) has a width (G) in the range of 1/20 to 1/4 of the diameter (T) of the reactor, and each stirring element (2) has a height (L) in the range between 3/2 of the diameter (D) of the stirring device and the height (V) of the reactor.

2. The cylinder-shaped reactor according to claim 1, wherein each stirring element (2) is concave blade-shaped with a bending radius and with concavity in the direction of rotation of the stirring device, said bending radius being at least 1/3 of the diameter(T) of the reactor.

3. The cylinder-shaped reactor according to claim 1 or 2, wherein there are three stirring elements (2).

4. The cylinder-shaped reactor according to anyone of the preceding claims, wherein the lower end part (3) of each stirring element (2) is wider, in the horizontal direction, than the upper end part (5), and the vertical part (4) of each stirring element (2) is at an angle (B) comprised between 0° to 10° with the rotation axis.

5. The cylinder-shaped reactor according to anyone of the preceding claims, wherein the lower end part (3) of each stirring element (2) has a lower edge at an angle (C) comprised between 0° and 45° with the horizontal plane.

6. The cylinder-shaped reactor according to anyone of the preceding claims, wherein the upper end part (5) of each stirring element (2) has a height (M) of at least 1/20 of the diameter (T) of the reactor.

7. A (co)polymerization process of polymerizing fluorinated olefinic monomers in emulsion or suspension, the process being carried out in a cylinder-shaped reactor according to anyone of the preceding claims.

**Patentansprüche**

1. Zylinderförmiger Reaktor umfassend einen Rührapparat, welcher insbesondere für das Mischen heterogener Systeme geeignet ist, wobei der Rührapparat eine rotierende Rührvorrichtung (1) und eine zur Rotationsachse der Rührvorrichtung (1) koaxiale Antriebswelle umfaßt, wobei die rotierende Rührvorrichtung mit der Antriebswelle verbunden ist und eine Mehrzahl von Rührelementen (2) umfaßt, welche in der horizontalen Ebene C-förmig sind und symmetrisch um die Rotationsachse angeordnet sind, dadurch gekennzeichnet, daß jedes Rührelement (2) ein unteres Endstück (3), ein vertikales Zwischenstück (4) und ein oberes Endstück (5) umfaßt, die Rührelemente (2) am oberen Endstück (7) und am unteren Endstück (8) miteinander verbunden sind und die Rührvorrichtung (1) einen Basisdurchmesser (D) im Bereich von 1/3 bis 2/3 des Durchmessers (T) des Reaktors aufweist, das untere Endstück (3) eine Höhe (F) von mindestens 1/5 des Basisdurchmessers (D) der Rührvorrichtung aufweist, das vertikale Stück (4) eine Breite (G) im Bereich von 1/20 bis 1/4 des Durchmessers (T) des Reaktors aufweist, und jedes Rührelement (2) eine Höhe (L) im Bereich zwischen 3/2 des Durchmessers (D) der Rührvorrichtung und der Höhe (V) des Reaktors aufweist.

2. Zylinderförmiger Reaktor nach Anspruch 1, worin jedes Rührelement (2) eine konkave Blattform mit einem Biegeradius aufweist und in der Rotationsrichtung der Rührvorrichtung konkav ist, wobei der Biegeradius mindestens 1/3 des Durchmessers (T) des Reaktors beträgt.

**3.** Zylinderförmiger Reaktor nach Anspruch 1 oder 2, worin drei Rührelemente vorhanden sind.

**4.** Zylinderförmiger Reaktor nach irgendeinem der vorhergehenden Ansprüche, worin das untere Endstück (3) jedes Rührelements (2) in horizontaler Richtung breiter ist als das obere Endstück (5), und das vertikale Stück (4) jedes Rührelements (2) in einem Winkel (B) zwischen 0° und 10° zur Rotationsachse liegt.

**5.** Zylinderförmiger Reaktor nach irgendeinem der vorhergehenden Ansprüche, worin das untere Endstück (3) jedes Rührelements (2) eine Unterkante in einem Winkel (C) zwischen 0° und 45° zur horizontalen Ebene aufweist.

**6.** Zylinderförmiger Reaktor nach irgendeinem der vorhergehenden Ansprüche, worin das obere Endstück (5) jedes Rührelements (2) eine Höhe (M) von mindestens 1/20 des Durchmessers (T) des Reaktors aufweist.

**7.** (Co)polymerisations-Verfahren zur Polymerisation von fluorierten olefinischen Monomeren in Emulsion oder Suspension, wobei das Verfahren in einem zylinderförmigen Reaktor gemäß irgendeinem der vorhergehenden Ansprüche durchgeführt wird.

**Revendications**

**1.** Réacteur en forme de cylindre, comprenant un appareil d'agitation, particulièrement approprié pour mélanger des systèmes hétérogènes, ledit appareil d'agitation comprenant un dispositif d'agitation tournant (1) et un arbre d'entraînement coaxial par rapport à l'axe de rotation du dispositif d'agitation (1), ledit dispositif d'agitation tournant étant connecté à l'arbre d'entraînement et comprenant plusieurs éléments d'agitation (2) qui sont en forme de C dans le plan horizontal et disposés symétriquement autour de l'axe de rotation, caractérisé par le fait que chaque élément d'agitation (2) comprend une partie d'extrémité inférieure (3), une partie intermédiaire verticale (4) et une partie d'extrémité supérieure (5), les éléments d'agitation (2) sont fixés ensemble au niveau des parties d'extrémités supérieure (7) et inférieure (6), et ledit dispositif d'agitation (1) a un diamètre de base (D) dans la plage de 1/3 à 2/3 du diamètre (T) du réacteur, la partie d'extrémité inférieure (3) a une hauteur (F) au moins du 1/5 du diamètre de base (D) du dispositif d'agitation, la partie verticale (4) a une largeur (G) dans la plage de 1/20 à 1/4 du diamètre (T) du réacteur, et chaque élément d'agitation (2) a une hauteur (L) dans la plage entre 3/2 du diamètre (D) du dispositif d'agitation et la hauteur (V) du réacteur.

**2.** Réacteur en forme de cylindre selon la revendication 1, dans lequel chaque élément d'agitation (2) est en forme de lame concave avec un rayon de courbure et avec une concavité dans la direction de rotation du dispositif d'agitation, ledit rayon de courbure étant au moins 1/3 du diamètre (T) du réacteur.

**3.** Réacteur en forme de cylindre selon l'une des revendications 1 ou 2, dans lequel il y a trois éléments d'agitation (2).

**4.** Réacteur en forme de cylindre selon l'une quelconque des revendications précédentes, dans lequel la partie d'extrémité inférieure (3) de chaque élément d'agitation (2) est plus large, dans la direction horizontale, que la partie d'extrémité supérieure (5), et la partie verticale (4) de chaque élément d'agitation (2) forme un angle (B) compris entre 0° et 10° avec l'axe de rotation.

**5.** Réacteur en forme de cylindre selon l'une quelconque des revendications précédentes, dans lequel la partie d'extrémité inférieure (3) de chaque élément d'agitation (2) a une bordure inférieure à un angle (C) compris entre 0° et 45° avec le plan horizontal.

**6.** Réacteur en forme de cylindre selon l'une quelconque des revendications précédentes, dans lequel la partie d'extrémité supérieure (5) de chaque élément d'agitation (2) a une hauteur (M) d'au moins 1/20 du diamètre (T) du réacteur.

**7.** Procédé de (co)polymérisation consistant à polymériser des monomères oléfiniques fluorés en émulsion ou suspension, le procédé étant effectué dans un réacteur en forme de cylindre tel que défini à l'une quelconque des revendications précédentes.

Fig. 1

Fig. 2

Fig. 3

Fig. 4

Fig. 5